Europäisches Patentamt

European Patent Office

Office européen des brevets

(11) Numéro de publication: **0 244 284 B1**

## FASCICULE DE BREVET EUROPEEN

(45) Date de publication de fascicule du brevet:
**24.07.91**

(21) Numéro de dépôt: **87400786.7**

(22) Date de dépôt: **08.04.87**

(51) Int. Cl.⁵: **H02H 3/44**, H02H 3/05

(54) **Déclencheur statique instantané pour un disjoncteur limiteur.**

(30) Priorité: **30.04.86 FR 8606431**

(43) Date de publication de la demande:
**04.11.87 Bulletin 87/45**

(45) Mention de la délivrance du brevet:
**24.07.91 Bulletin 91/30**

(84) Etats contractants désignés:
**AT BE CH DE ES GB IT LI NL SE**

(56) Documents cités:
**EP-A- 0 129 624**
**US-A- 4 297 741**

(73) Titulaire: **MERLIN GERIN**
**Rue Henri Tarze**
**F-38050 Grenoble Cédex(FR)**

(72) Inventeur: **Lindeperg, François**
**Merlin Gerin Sce. Brevets**
**F-38050 Grenoble Cedex(FR)**

(74) Mandataire: **Kern, Paul et al**
**Merlin Gerin Sce. Brevets 20, rue Henri Tarze**
**F-38050 Grenoble Cédex(FR)**

## Description

L'invention est relative à un déclencheur statique ayant un déclencheur instantané analogique pour provoquer une ouverture rapide des contacts d'un disjoncteur avec une limitation du courant.

Les disjoncteurs limiteurs réalisent une limitation des courants de court-circuit après une ouverture rapide des contacts et une coupure du courant, avant que celui-ci ait pu atteindre des valeurs importantes. Cette ouverture rapide des contacts s'oppose à l'effet de sélectivité qui exige une temporisation suffisante à l'élimination du défaut par un disjoncteur aval. Il a déjà été proposé de concilier la sélectivité et la limitation du courant en provoquant une ouverture rapide des contacts, en cas de court-circuit, suivie d'une refermeture de ces contacts pour réalimenter les parties saines du réseau, mais ces dispositifs sont compliqués et impliquent un battement des contacts.

La présente invention a peur but de permettre la réalisation d'un système mixte qui donne la priorité, dans certains cas, à la sélectivité, et dans d'autres cas à la limitation du courant. L'invention est basée sur la constatation que la limitation du courant est prioritaire dans le cas de forts courants de court-circuit, qui doivent obligatoirement être limités pour éviter une destruction du disjoncteur et des circuits alimentés. Dans ces cas exceptionnels, la sélectivité est sacrifiée à la limitation du courant. Pour des courants de court-circuit normaux qui atteignent des valeurs inférieures au niveau de tenue électrodynamique du disjoncteur, l'effet de limitation de courant est superflu et la sélectivité peut être rendue prioritaire.

Le document EP-A-129.624 décrit un déclencheur statique instantané dans lequel le déclenchement est effectué lorsque la dérivée du courant mesuré est supérieure à un seuil prédéterminé et que le signal représentatif du courant se trouve à l'intérieur d'une fenêtre comprise entre un seuil supérieur et un seuil inférieur.

Le déclencheur statique selon l'invention comporte:

- des moyens de production d'un signal représentatif du courant parcourant un conducteur protégé par le disjoncteur et d'un signal analogique dérivé représentatif de la dérivée par rapport au temps dudit courant,
- un premier circuit comparateur à seuil comparant le signal représentatif du courant à un seuil haut et à un seuil bas, et
- un second circuit comparateur à seuil comparant le signal dérivé à un seuil prédéterminé,

déclencheur caractérisé en ce que lesdits moyens de production comportent un capteur de courant engendrant ledit signal dérivé et un circuit intégrateur recevant le signal dérivé et émettant le signal représentatif du courant, et en ce qu'il émet un signal de déclenchement instantané lorsque le signal représentatif du courant est supérieur au seuil haut, ou lorsque le signal dérivé est supérieur au seuil prédéterminé et le signal représentatif du courant supérieur au seuil bas.

La dérivée du courant, par rapport au temps correspond à la vitesse de croissance du courant de court-circuit et cette valeur fournit, dès l'apparition du courant de court-circuit, une indication de la valeur crête du courant qui serait atteinte en cas de non interruption par le disjoncteur. Si cette valeur crête présumée ne dépasse pas la limite de tenue électrodynamique du disjoncteur, le déclencheur instantané est réglé pour une valeur de seuil haut de déclenchement. La sélectivité peut être ainsi assurée par le déclencheur court retard et long retard ou tout autre dispositif de sélectivité nécessitant une temporisation. Si, par contre, la valeur de crête présumée dépasse la limite de tenue électrodynamique du disjoncteur, le déclencheur instantané intervient pour un seuil bas provoquant l'ouverture rapide des contacts du disjoncteur. On comprend que ce seuil bas est franchi d'autant plus rapidement que sa valeur est faible, ce qui permet une ouverture rapide des contacts et une limitation du courant, mais ce seuil bas est bien entendu supérieur au courant nominal du disjoncteur. Le changement de seuil est commandé par la vitesse de croissance du courant, lors de l'apparition d'un court-circuit, mais pour éviter des déclenchements intempestifs dus à des perturbations ou parasites se traduisant par une variation brusque du courant, il est important de subordonner le déclenchement du disjoncteur à la présence d'une valeur instantanée du courant supérieure au courant nominal du disjoncteur. Le signal dérivé du courant détermine l'intervention du déclencheur instantané pour le seuil haut ou le seuil bas.

Le signal dérivé du courant est avantageusement fourni par un capteur du type amagnétique qui délivre directement un signal de tension proportionnel à la dérivée du courant à mesurer. Le signal dérivé est comparé à une valeur de seuil dans un circuit comparateur pour sélectionner le seuil bas ou le seuil haut selon le franchissement ou non de cette valeur de seuil. Le même signal dérivé est avantageusement intégré pour fournir un signal proportionnel au courant lui-même comparé audit seuil haut et seuil bas pour provoquer le déclenchement du disjoncteur, lors du franchissement du seuil sélectionné.

Selon un développement de l'invention, le déclencheur instantané se prête à une surveillance de la continuité du circuit de mesure. A cet effet, on injecte dans le capteur un courant continu, qui fait apparaître une tension prédéterminée aux bornes de ce capteur, lors d'une continuité du circuit. Lors d'une interrruption du circuit capteur, la tension aux bornes s'accroît et est interprétée par le déclencheur instantané comme un courant de court-circuit provoquant le déclenchement. Ce circuit de surveillance évite un fonctionnement du disjoncteur avec un capteur déconnecté ou défaillant. L'injection du courant continu est effectuée au voisinage du circuit de traitement pour surveiller la continuité de l'ensemble du circuit de connexion du capteur, ainsi que ce dernier.

Le déclencheur instantané selon l'invention est de préférence un déclencheur analogique dont la rapidité de réponse est supérieure à celle d'un déclencheur numérique. Cette rapidité de réponse contribue bien entendu à l'effet de limitation recherché. Il est également souhaitable d'utiliser pour chaque phase un capteur et un circuit de traitement indépendant, chacun étant susceptible de provoquer le déclenchement du disjoncteur. Cette individualisation des capteurs et des déclencheurs instantanés participe à une rapidité de réponse et à une fiabilité accrue, la défaillance de l'un des circuits étant palliée par l'intervention d'un autre, qui a de fortes chances de voir également le court-circuit en cas de défaut.

Le déclencheur instantané peut être associé à un déclencheur électronique court retard et long retard standard, le même relais étant avantageusement utilisé pour provoquer l'ouverture instantanée du disjoncteur. Le déclencheur court retard, long retard peut être du type à propre courant utilisant des transformateurs de courant délivrant le signal de mesure du courant, ainsi que la puissance d'alimentation des circuits électroniques et du relais de déclenchement. Il est à noter que le signal dérivé, fourni par les capteurs amagnétiques, peut être utilisé pour le déclenchement long retard et court retard d'une manière bien connue des spécialistes.

D'autres avantages et caractéristiques ressortiront plus clairement de la description qui va suivre d'un mode de mise en oeuvre de l'invention, donné à titre d'exemple non limitatif et représenté aux dessins annexés dans lesquels :

- la figure 1 représente le schéma bloc d'un déclencheur instantané selon l'invention;
- la figure 2 est une vue détaillée du schéma du déclencheur selon la figure 1;
- la figure 3 montre le schéma bloc d'un déclencheur statique à déclencheur instantané et à déclencheur long retard et court retard.

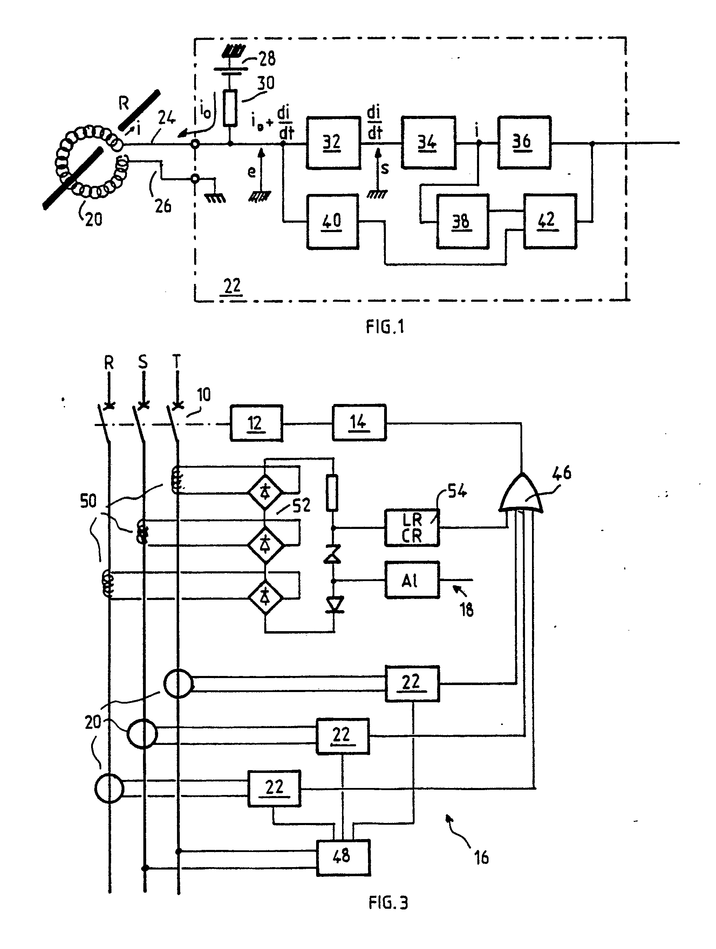

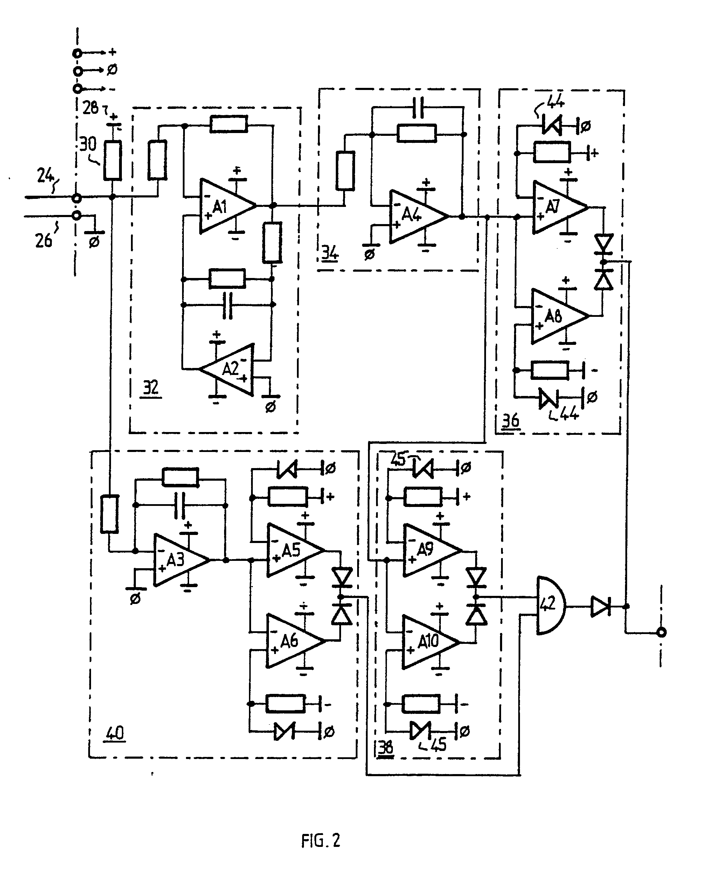

Sur les figures, un disjoncteur électrique, notamment basse tension, comporte des contacts mécaniques 10, commandés par un mécanisme 12, actionné par un relais de déclenchement 14 recevant des ordres de déclenchement d'un déclencheur instantané 16 et d'un déclencheur long retard, court retard 18. Le disjoncteur pourrait également être du type statique. Le déclencheur instantané 16 comporte trois capteurs 20, chacun associé à l'un des conducteurs R, S, T, du disjoncteur pour fournir un signal à un bloc déclencheur 22. Seul l'un des capteurs 20 et l'un des blocs déclencheur 22 sont décrits par la suite en référence aux figures 1 et 2, les autres étant identiques.

Le capteur 20 est du type amagnétique, par exemple constitué par un enroulement secondaire porté par un support amagnétique en forme de tore, traversé par le conducteur R constituant l'enroulement primaire. On sait qu'un tel capteur 20 délivre un signal de tension proportionnel à la dérivée du courant, par rapport au temps, circulant dans le conducteur R. Le capteur 20 est relié par des conducteurs 24, 26, au bloc déclencheur 22, par exemple constitué par une carte à circuit imprimé portant les composants et les circuits du déclencheur instantané. Dans l'enroulement secondaire du capteur 20 est injecté un courant continu io, fourni par une source de courant 28, reliée par l'intermédiaire d'une résistance 30 au conducteur 24, 26. L'injection de ce courant continu io s'effectue au niveau de la carte 22 pour contrôler l'intégrité du circuit constitué par les conducteurs 24, 26 et le capteur 20. Le signal e fourni par le capteur 20 est fonction de la tension induite aux bornes du capteur 20 par le courant io et de la dérivée di/dt du courant i parcourant le conducteur R. Ce signal de tension e est appliqué à un bloc 32 de contrôle de tension qui élimine la composante continue io. Le signal de sortie du bloc 32 est représentatif de la valeur di/dt qui est appliquée à un bloc intégrateur 34 délivrant un signal i proportionnel au courant circulant dans le conducteur R. Le signal i est appliqué à un bloc détecteur de seuil haut 36 et à un bloc détecteur de seuil bas 38, dont les sorties délivrent un signal de déclenchement lors du dépassement respectivement d'un seuil haut et d'un seuil bas prédéterminé.

Le signal e délivré par le capteur 20 est appliqué parallèlement à un bloc 40 de détection de la vitesse de croissance du courant i parcourant le conducteur R. Lorsque cette vitesse de croissance dépasse une valeur prédéterminée, le bloc 40 émet un signal appliqué à l'une des entrées d'une porte ET 42 dont l'autre entrée reçoit le signal de déclenchement du bloc détecteur 38 de seuil bas. La porte ET transmet le signal de déclenchement en présence d'un signal sur ses deux entrées, en l'occurrence lorsqu'à la fois le courant i est supérieur au seuil bas et la dérivée du courant i par rapport au temps est supérieure à une valeur prédéterminée.

Les circuits du bloc déclencheur 22, illustrés par la figure 2, sont des circuits analogiques utilisant des amplificateurs opérationnels A 1 à A 10. Le bloc de contrôle de liaison 32 fait appel à deux amplificateurs opérationnels A1, A2, montés en boucle de calage initial, éliminant la composante continue io. Les blocs détecteurs de seuil 36, 38, comprennent chacun deux amplificateurs opérationnels A 7, A 8; A 9, A 10 dont l'une des entrées est polarisée à une tension de seuil déterminée par une diode ZENER 44, 45. Le bloc 40 de détermination de la vitesse de croissance du courant i comporte un circuit à seuil du même genre à deux amplificateurs A 5 et A 6, reliés à la sortie d'un amplificateur opérationnel A 3. De tels circuits analogiques sont bien connus des spécialistes et il est inutile de les décrire plus en détails.

Le seuil du détecteur 36 à seuil haut correspond sensiblement à la tenue électrodynamique du disjoncteur, d'est-à-dire la valeur maximale pouvant être supportée par le disjoncteur sans dommage notable. La valeur du seuil bas du détecteur 38 est supérieure au courant nominal i du disjoncteur. La valeur du courant continu io est déterminée de manière que la montée en tension du signal e lors d'une interruption du circuit 24, 26, 20, soit suffisant pour provoque un déclenchement par le détecteur à seuil haut 36. Le bloc 40 réagissant à la variation du courant en fonction du temps est réglé pour engendrer un signal lorsque cette valeur, correspondant à la pente de la courbe représentative du courant en fonction du temps, est supérieure à celle d'une courbe ayant pour valeur crête du courant la limite de tenu électrodynamique du disjoncteur.

Le déclencheur instantané selon l'invention fonctionne de la manière suivante:

En fonctionnement normal, le courant i parcourant le conducteur R est inférieur à la valeur du détecteur de seuil bas 38 et les variations de ce courant di/dt sont inférieures au seuil de réaction du bloc 40. Le bloc déclencheur 22 n'émet aucun signal de déclenchement. Lors d'un court-circuit relativement faible, dont la valeur crête présumée est inférieure au seuil haut du détecteur 36, en particulier inférieure au seuil de tenue électrodynamique du disjoncteur, le signal di/dt reste inférieur au seuil de réponse du bloc 40 de vitesse de croissance de l'intensité et le bloc déclencheur 22 réagit uniquement au seuil haut déterminé par le détecteur 36. Si la valeur du courant i reste inférieure à ce seuil haut, le déclencheur instantané ne délivre aucun ordre de déclenchement. Si par contre, le courant i franchit ce seuil, par exemple à la suite d'une évolution inattendue du courant de court-circuit, le déclencheur instantané réagit et provoque le déclenchement pour protéger le disjoncteur et les circuits alimentés. Lors d'un court-circuit important se traduisant par un signal di/dt supérieur au seuil du bloc 40, ce dernier délivre un signal sur l'entrée de la porte ET 42. Parallèlement, le bloc intégrateur 34 transmet un signal représentatif du courant i au bloc 38 de détection de seuil bas qui transmet un signal de déclenchement à la porte ET 42 dès que la valeur du courant i franchit ce seuil. Ce franchissement intervient très rapidement et permet une ouverture rapide du disjoncteur avec un effet de limitation du courant important. Dès que le courant i franchira le seuil haut du détecteur 36, un deuxième signal de déclenchement est transmis au disjoncteur, mais ce deuxième signal est sans effet, puisqu'il intervient après celui du détecteur de seuil bas 38. Il est clair que le changement de seuil, déterminé par le bloc 40, permet un déclenchement plus rapide qui favorise la limitation du courant de court-circuit.

Dans le cas d'une interruption des conducteurs de connexion 24, 26 ou du capteur 20, la montée en tension aux bornes du capteur 20, due à cette interruption, provoque un signal i supérieur au seuil haut du bloc détecteur 36, lequel émet un signal de déclenchement provoquant l'ouverture due disjoncteur. La connexion correcte du capteur 20 au bloc déclencheur 22 est ainsi contrôlée en permanence, toute défectuosité se traduisant par un déclenchement du disjoncteur. Un déclenchement pour une valeur du courant i égal au seuil bas du détecteur 38 ne peut intervenir que si ce dépassement coïncide avec une variation du courant supérieure à la valeur de seuil du bloc 40. Inversement, une forte variation du courant dépassant la valeur de seuil du bloc 40 provoque un déclenchement uniquement si en même temps le courant i dépasse le seuil bas du détecteur 38. On évite ainsi des déclenchements intempestifs dus à des variations brusques d'amplitude limitée du courant.

En se référant à la figure 3, on voit qu'un capteur 20 est associé à chacun des conducteurs R, S, T, du disjoncteur, chaque capteur 20 étant relié à un bloc déclencheur 22. Les sorties des trois blocs déclencheurs 22 sont appliquées à une porte OU 46, dont la sortie est reliée au relais de déclenchement 14. Les blocs déclencheurs 22 sont reliés à un bloc d'alimentation 48, par exemple connecté aux conducteurs S, T, ou à toute autre source de tension. Le déclenchement du disjoncteur 10 est provoqué par le signal de déclenchement de l'un quelconque des blocs déclencheurs instantanés 22. Cette séparation des différents circuits déclencheurs instantanés augmente la fiabilité de l'ensemble, un court-circuit important étant généralement vu par au moins deux des conducteurs R, S, T, la défaillance de l'un des blocs déclencheurs 22 étant alors sans grand effet.

Le déclencheur instantané selon l'invention est généralement associé à un déclencheur long retard, court retard standard, dont un mode de réalisation est schématiquement représenté à la figure 3. Le déclencheur long retard, court retard délivre un signal de déclenchement sur l'une des entrées de la port 46 en parallèle des blocs déclencheurs instantanés 22. Le bloc déclencheur long retard, court retard 18 comporte trois transformateurs de courant 50, reliés à des ponts redresseurs 52 connectés en série pour délivrer un signal proportionnel au courant d'intensité maximale parcourant l'un des conducteurs R, S, T. Ce signal est appliqué à un bloc de traitement 54, provoquant un signal de déclenchement temporisé long retard ou court retard, lors d'un dépassement d'un seuil court retard ou long retard d'une manière bien connue des spécialistes. Il est clair que le déclencheur instantané peut être associé à un bloc déclencheur d'un type différent, par exemple à traitement numérique ou à un système de déclenchement électro-mécanique standard. Le système de changement de seuil lors d'un court-circuit important permet de conserver une temporisation suffisante à des déclenchements sélectifs pour toutes les valeurs de court-circuit n mettant pas en danger l'intégrité du disjoncteur, c'est-à-dire toutes les valeurs de crête restant inférieures à la tenue électrodynamique du disjoncteur.

L'invention est bien entendu nullement limitée au mode de mise en oeuvre plus particulièrement décrit, mais elle s'étend à la variante dans laquelle le capteur 20 serait d'un type différent ou celle encore où la valeur de la variation de courant en fonction du temps serait déterminée par des circuits électroniques de traitement.

## Revendications

1. Déclencheur statique ayant un déclencheur instantané analogique pour provoquer une ouverture rapide des contacts (10) d'un disjoncteur avec une limitation du courant comprenant:
   - des moyens de production d'un signal (i) représentatif du courant parcourant un conducteur protégé par le disjoncteur et d'un signal analogique dérivé (di/dt) représentatif de la dérivée par rapport au temps dudit courant,
   - un premier circuit comparateur à seuil (36,38) comparant le signal (i) représentatif du courant à un seuil haut et à un seuil bas, et
   - un second circuit comparateur à seuil (40) comparant le signal dérivé (di/dt) à un seuil prédéterminé,
   déclencheur caractérisé en ce que lesdits moyens de production comportent un capteur (20) de courant engendrant ledit signal dérivé (di/dt) et un circuit intégrateur (34) recevant le signal dérivé et émettant le signal (i) représentatif du courant, et en ce qu'il émet un signal de déclenchement instantané lorsque le signal (i) représentatif du courant est supérieur au seuil haut, ou lorsque le signal dérivé (di/dt) est supérieur au seuil prédéterminé et le signal (i) représentatif du courant supérieur au seuil bas.

2. Déclencheur selon la revendication 1, caractérisé en ce que le premier circuit comparateur à seuil (36,38) comporte un premier comparateur (36) comparant le signal (i) représentatif du courant et le seuil haut, un second comparateur (38) comparant le signal (i) représentatif du courant et le seuil bas, les sorties du second comparateur (38) et du second circuit comparateur à seuil (40) étant connectées aux entrées d'une porte ET (42).

3. Déclencheur selon la revendication 2, caractérisé en ce que la sortie de la porte ET (42) et la sortie du premier comparateur (36), sont reliées à un relais de déclenchement (14) du disjoncteur.

4. Déclencheur selon la revendication 1, 2 ou 3, caractérisé en ce que ledit capteur (20) est constitué par un tore amagnétique ayant un enroulement primaire constitué par ledit conducteur et un enroulement secondaire engendrant ledit signal dérivé (di/dt).

5. Déclencheur selon la revendication 4, caractérisé en ce que ledit enroulement secondaire est connecté par l'intermédiaire d'une résistance (30) à une source de courant continu (28) qui engendre un signal continu io se superposant audit signal analogique dérivé (di/dt).

6. Déclencheur selon la revendication 5, caractérisé en ce qu'il comporte un circuit de traitement (32) dudit signal dérivé (di/dt) et continu (io) qui, en fonctionnement normal, élimine ledit signal continu (io) et qui engendre un signal de déclenchement, lors d'une déconnexion de l'enroulement secondaire (20) de ladite source de courant (28).

7. Déclencheur selon la revendication 5 ou 6, caractérisé en ce qu'il comporte un bloc (22) ou une carte électronique de support desdits circuits intégrateur (34) et comparateurs (36, 38, 40), et de la résistance (30) associée à la source de courant continu (28), ledit capteur (20) étant connecté par une liaison externe (24, 26) audit bloc.

8. Déclencheur pour disjoncteur multipolaire selon l'une quelconque des revendications précédentes, caractérisé en ce qu'à chaque pôle est associé un déclencheur statique instantané (20, 22), les sorties de l'ensemble desdits déclencheurs statiques instantanés étant reliées au relais de déclenchement (14) du disjoncteur pour provoquer son ouverture sur ordre de l'un quelconque desdits déclencheurs statiques instantanés.

9. Déclencheur selon l'une quelconque des revendications précédentes, caractérisé en ce qu'il comporte un déclencheur statique (18) long retard et court retard, ayant un capteur de courant (50) et un bloc de traitement (54) du signal émis par le capteur de courant, pour délivrer un signal de déclenchement long retard ou court retard en cas de défaut et un relais de déclenchement (14) commun au déclencheur long retard, court retard (18) et au déclencheur instantané (20, 22).

## Claims

1. A solid state-trip device having an analog instantaneous trip release to bring about high-speed opening of the contacts (10) of a circuit breaker with current limiting comprising:
   - generating means of a signal (i) representative of the current flowing in a conductor protected by the circuit breaker and of a derivative analog signal (di/dt) representative of the derivative in relation to time of said current,
   - a first threshold comparator circuit (36, 38) comparing said signal (i) representative of the current with an upper threshold and a lower threshold, and
   - a second threshold comparator circuit (40) comparing said derivative signal (di/dt) with a predetermined threshold,
   trip device, characterized in that said generating means comprises a current sensor (20) generating said derivative signal (di/dt) and an integrating circuit (34) receiving the derivative signal and emitting the signal (i) representative of the current, and in that it emits an instantaneous tripping signal when the representative signal (i) of the current is higher than the upper threshold, or when the derivative signal (di/dt) is higher than the predetermined threshold and the signal (i) representative of the current higher than the lower threshold.

2. A trip device according to claim 1, characterized in that the first threshold comparator circuit (36, 38) comprises a first comparator (36) comparing the signal (i) representative of the current and the upper threshold, a second comparator (38) comparing the signal (i) representative of the current with the lower threshold, the outputs of the second comparator (38) and the second threshold comparator circuit (40) being connected to the inputs of a gate AND (42).

3. A trip device according to claim 2, characterized in that the output of the AND gate (42) and the output of the first comparator circuit are connected to a tripping relay (14) of the circuit breaker.

4. A trip device according to claim 1, 2 or 3, characterized in that said sensor (20) is made up of a non-magnetic tore having a primary winding constituted by said conductor and a secondary winding generating said derivative signal (di/dt).

5. A trip device according to claim 4, characterized in that said secondary winding is connected via a resistor (30) to a direct current source (28) which generates a direct current signal (io) superposed on said analog derivative signal (di/dt).

6. A trip device according to claim 5, characterized in that it comprises a processing circuit (32) of said derivative signal (di/dt) and direct current signal (io) which, in normal operation, eliminates said direct current signal (io) and which generates a tripping signal when the secondary winding (20) is disconnected from said current source (28).

7. A trip device according to claim 5 or 6, characterized in that it comprises an electronic unit (22) or board supporting said integrating (34) and comparator circuits (36, 38, 40) and the resistor (30) associated with the direct current source (28), said sensor (20) being connected by means of an external connection (24, 26) to said unit.

8. A trip device for a multipole circuit breaker according to anyone of the preceding claims, characterized in that each pole is associated with a solid-state instantaneous trip release (20, 22), the outputs of all of said solid-state instantaneous trip releases being connected to a tripping relay (14) of the circuit breaker to cause the latter to trip on an order from any one of said solid-state instantaneous trip releases.

9. A trip device according to anyone of the preceding claims, characterized in that it comprises a long delay and short delay solid-state trip release (18), having a current sensor (50) and a processing unit (54) of the signal emitted by the current sensor, to deliver a long delay or short delay tripping signal in the event of a fault and a tripping relay (14) common to the long delay, short relay trip release (18) and to the instantaneous trip release (20, 22).

**Patentansprüche**

1. Statischer Auslöser mit einem analogen Momentan-Auslöser, um ein schnelles Oeffnen der Kontakte (10) eines strombegrenzenden Leistungsschalters zu bewirken, mit:
   - Erzeugungsmitteln eines Signals (i), das den durch einen vom Leistungsschalter geschützten Leiter fliessenden Strom darstellt und eines abgeleiteten analogen Signals (di/dt), das die Ableitung nach der Zeit des genannten Stromes darstellt,
   - einem ersten Schwellen-Vergleicherkreis (36, 38), der das den Strom darstellende Signal (i) mit einem hohen Wert und einem tiefen Wert vergleicht, und
   - einem zweiten Schwellen-Vergleicherkreis (40), der das abgeleitete Signal (di/dt) mit einem vorgegebenen Wert vergleicht,

   Auslöser, dadurch gekennzeichnet, dass die genannten Erzeugungsmittel einen Stromfühler (20) aufweisen, der das genannte abgeleitete Signal (di/dt) erzeugt, und einen Integrierkreis (34), der das abgeleitete Signal empfängt und ein den Strom darstellendes Signal (i) aussendet, und dass er ein unverzügliches Auslösesignal abgibt, wenn das den Strom darstellende Signal (i) höher als die obere Schwelle ist, oder wenn das abgeleitete Signal (di/dt) höher als die vorbestimmte Schwelle und das den Strom darstellende Signal (i) höher als die untere Schwelle ist.

2. Auslöser gemäss Anspruch 1, dadurch gekennzeichnet, dass der erste Schwellen-Vergleicherkreis (36, 38) einen ersten Vergleicher aufweist (36), der das den Strom darstellende Signal (i) und die obere Schwelle vergleicht, einen zweiten Vergleicher (38), der das den Strom darstellende Signal (i) und die untere Schwelle vergleicht, wobei die Ausgänge des zweiten Vergleichers (38) und des zweiten Schwellen-Vergleicherkreises (40) mit den Eingängen eines UND-Tores (42) verbunden sind.

3. Auslöser gemäss Anspruch 2, dadurch gekennzeichnet, dass der Ausgang des UND-Tores (42) und der Ausgang des ersten Vergleichers (36) mit einem Auslöserelais (14) des Leistungsschalters verbunden sind.

4. Auslöser gemäss Anspruch 1, 2 oder 3, dadurch gekennzeichnet, dass der genannte Fühler (20) von einem unmagnetischen Ringkern gebildet wird, mit einer von dem genannten Leiter gebildeten Primärwicklung und mit einer das genannte abgeleitete Signal (di/dt) erzeugenden Sekundärwicklung.

5. Auslöser gemäss Anspruch 4, dadurch gekennzeichnet, dass die genannte Sekundärwicklung mittels eines Widerstandes (30) mit einer Gleichstromquelle (28) verbunden ist, die ein Dauersignal (io) erzeugt, das sich mit dem analogen abgeleiteten Signal (di/dt) überdeckt.

6. Auslöser gemäss Anspruch 5, dadurch gekennzeichnet, dass er einen Verarbeitungskreis (32) des genannten abgeleiteten Signals (di/dt) und Dauersignals (io) aufweist, der bei normalem Betrieb das genannte Dauersignal (io) auslöscht und ein Auslösesignal erzeugt, bei einer Trennung der Sekundärwicklung (20) von der genannten Stromquelle (28).

7. Auslöser gemäss Anspruch 5 oder 6, dadurch gekennzeichnet, dass er einen Block (22) oder eine elektronische Karte zum Tragen der genannten Integrierkreise (34) und Vergleicherkreise (36, 38, 40) und des mit der Gleichstromquelle (28) verbundenen Widerstandes (30) aufweist, wobei der genannte Fühler (20) durch eine äussere Verbindung (24, 26) mit dem genannten Block verbunden ist.

8. Auslöser für mehrpolige Leistungsschalter, gemäss irgendeinem der vorhergehenden Ansprüche, dadurch gekennzeichnet, dass jedem Pol ein statischer Momentanauslöser (20, 22) zugeordnet ist, wobei die Ausgänge der gesamten genannten statischen Momentanauslöser mit dem Auslöserelais (14) des Leistungsschalters verbunden sind, um seine Oeffnung auf Befehl eines beliebigen der genannten statischen Momentanauslöser zu bewirken.

9. Auslöser gemäss irgendeinem der vorhergehenden Ansprüche, dadurch gekennzeichnet, dass er einen statischen Auslöser (18) mit Langzeitverzögerung und Kurzzeitverzögerung aufweist, mit einem Stromfühler (50) und einer Verarbeitungseinheit (54) des von dem Stromfühler abgegebenen Signals, um bei Fehlerauftritt ein langzeitverzögertes oder kurzzeitverzögertes Auslösesignal auszusenden, und ein dem Langzeitverzögerungs/Kurzzeitverzögerungs-Auslöser (18) und dem Momentanauslöser (20, 22) gemeines Auslöserelais.

FIG.1

FIG.3

FIG.2